# EUROPÄISCHE PATENTSCHRIFT

(11) **EP 4 070 439 B1**
(45) Veröffentlichungstag und Bekanntmachung des Hinweises auf die Patenterteilung: **01.07.2026**
(21) Anmeldenummer: 20808011.9
(22) Anmeldetag: 05.11.2020
(51) Int. Cl.: H02K 16/00, H02K 21/12, H02K 5/20, H02K 9/19, H02K 7/10, H02K 16/02, H02K 21/14, H02K 21/22

(54) **ANTRIEBSEINHEIT UND ANTRIEBSANORDNUNG**
DRIVE UNIT AND DRIVE ASSEMBLY
UNITÉ D'ENTRAÎNEMENT ET ENSEMBLE D'ENTRAÎNEMENT

(30) Priorität: 04.12.2019 DE 102019132942
(43) Veröffentlichungstag der Anmeldung: 12.10.2022
(73) Patentinhaber: Schaeffler Technologies AG & Co. KG, 91074 Herzogenaurach (DE)
(72) Erfinder: LEHMANN, Steffen, 76275 Ettlingen (DE)
(74) Vertreter: Schaeffler Technologies
(86) Internationale Anmeldenummer: PCT/DE2020/100945
(87) Internationale Veröffentlichungsnummer: WO 2021/110199

(56) Entgegenhaltungen:
- CN-A- 105 896 855
- CN-A- 107 215 196
- CN-A- 108 736 653
- CN-A- 109 435 676
- DE-A1- 102014 102 632
- DE-A1- 102016 116 033
- US-A1- 2015 280 525
- US-A1- 2016 164 377
- US-B2- 8 183 723
- US-B2- 8 183 724

## Beschreibung

Die Erfindung betrifft eine Antriebseinheit für einen Antriebsstrang eines elektrisch antreibbaren Kraftfahrzeugs, insbesondere eines Hybridkraftfahrzeuges, sowie eine Antriebsanordnung.

Aus dem Stand der Technik sind diverse Antriebseinheiten bekannt, die in Antriebsanordnungen oder Antriebssträngen integriert sind.

Die DE 11 2015 006 071 T5 offenbart ein Hybridfahrzeugantriebssystem mit einem Generator, der unter Verwendung der Leistung eines Verbrennungsmotors elektrische Energie generieren kann; einem Elektromotor, der durch elektrische Energie angetrieben wird, um Räder anzutreiben; einem Gehäuse, das den Generator und den Elektromotor aufnimmt, und mit einer Leistungssteuereinheit zum Steuern des Generators und des Elektromotor. Der Generator und der Elektromotor sind dabei nebeneinander auf einer gleichen Achse in dem Gehäuse angeordnet.

Die US 2016 / 0218584 A1 beschreibt eine Steuerungseinheit, welche zur Steuerung elektrischer Maschinen dient, wobei die Steuerungseinheit an einem Gehäuse der die elektrischen Maschinen umfassenden Antriebseinheit montiert ist. Die Antriebseinheit umfasst dabei zwei elektrische Maschinen, welche koaxial sowie axial benachbart zueinander angeordnet sind.

In der WO 2019 101 264 A1 ist ein Antriebsstrang für ein Hybridkraftfahrzeug offenbart. Der Antriebsstrang umfasst eine Getriebeeingangswelle, die über einen ersten Teilantriebsstrang mit einer ersten elektrischen Maschine und einer Verbrennungskraftmaschine zur Drehmomentübertragung in Wirkbeziehung steht und die über einen zweiten Teilantriebsstrang mit einer zweiten elektrischen Maschine zur Drehmomentübertragung in Wirkbeziehung steht. Die beiden elektrischen Maschinen sind dabei koaxial sowie axial benachbart zueinander angeordnet.

Eine Antriebseinheit mit mehreren elektrischen Rotationsmaschinen in einer Antriebsanordnung zu integrieren, die für ein Hybridkraftahrzeug vorgesehen ist, unterliegt besonders in axialer Richtung strengen Bauraumanforderungen. Insbesondere bei Einsatz einer derartigen Antriebseinheit in sogenannten Front-Quer-Anordnungen in Kraftfahrzeugen, in welchen die elektrischen Rotationsmaschinen und die Verbrennungskraftmaschine als Frontantriebe eingesetzt werden und eine jeweilige Rotationsachse einer elektrischen Rotationsmaschine und der Verbrennungskraftmaschine quer zur Längsrichtung des Kraftfahrzeugs angeordnet ist, ist eine axial besonders kurz bauende Antriebsanordnung vorteilhaft.

Oftmals wird eine Kühlung der elektrischen Rotationsmaschinen benötigt. Beispielsweise ist bekannt, ein erstes Strömungssystem zur Realisierung einer Strömung einer ersten Flüssigkeit zur zumindest anteiligen Kühlung wenigstens einer elektrischen Rotationsmaschine vorzusehen, sowie ein zweites Strömungssystem zur Realisierung einer Strömung einer zweiten Flüssigkeit vorzusehen, wobei über einen Wärmetauscher Wärme von dem ersten Strömungssystem auf das zweite Strömungssystem übertragbar ist.

Die erste Flüssigkeit kann auch zur Kühlung beider elektrischer Rotationsmaschinen dienen und derart durch die Antriebseinheit strömen, dass wenigstens ein Auslass des ersten Strömungssystems die Kühlflüssigkeit an die erste elektrische Rotationsmaschine leitet, und wenigstens ein weiterer Auslass des ersten Strömungssystems die Kühlflüssigkeit an die zweite elektrische Rotationsmaschine leitet. Der Auslass zur Kühlung der ersten elektrischen Rotationsmaschine ist aufgrund der Anordnung der elektrischen Rotationsmaschinen axial nebeneinander zum weiteren Auslass zur Kühlung der zweiten elektrischen Rotationsmaschine in axialer Richtung deutlich beabstandet.

Ferner ist aus der DE 10 2016 116 033 A1 eine Antriebseinheit bekannt, die auf den Oberbegriff des Anspruchs 1 lesbar ist. Entsprechende Kühlsysteme für Antriebseinheiten mit axial und radial geschachtelten E-Maschinen, bei denen die Statoren jeweils zwischen den Rotoren angeordnet sind, sind auch aus der CN 107 215 196 A und der CN 105 896 855 A bekannt. Weiterer relevanter Stand der Technik, der wenigstens Kühlsysteme für E-Maschinen zeigt ist, aus den Offenbarungen der CN 108 736 653 A, der DE 10 2014 102 632 A1, der US 2015/280525 A1, der US 2016/164377 A1, der CN 109 435 676 A und der US 8 183 724 B2 bekannt.

Der vorliegenden Erfindung liegt die Aufgabe zugrunde, eine Antriebseinheit sowie eine damit ausgestattete Antriebsanordnung zur Verfügung zu stellen, die in kostengünstiger Ausgestaltung sowie bauraumsparender Weise eine optimale Kühlung und damit einen effizienten Betrieb gewährleisten.

Die Aufgabe wird durch die erfindungsgemäße Antriebseinheit nach Anspruch 1 gelöst. Vorteilhafte Ausgestaltungen der Antriebseinheit sind in den Unteransprüchen 2 bis 5 angegeben. Ergänzend wird eine Antriebsanordnung, welche die Antriebseinheit aufweist, gemäß Anspruch 6 zur Verfügung gestellt.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe "axial" und "radial" beziehen sich im Rahmen der vorliegenden Erfindung immer auf die Rotationsachse der Antriebseinheit, die der Rotationsachse zumindest einer der von der Antriebseinheit umfassten elektrischen Rotationsmaschinen entspricht.

Die Erfindung betrifft eine Antriebseinheit für einen Antriebsstrang eines elektrisch antreibbaren Kraftfahrzeugs, insbesondere eines Hybridkraftfahrzeuges, mit einer ersten elektrischen Rotationsmaschine sowie einer zweiten elektrischen Rotationsmaschine und einer ersten Welle sowie einer zweiten Welle, wobei ein Rotor der ersten elektrischen Rotationsmaschine drehfest mit der ersten Welle verbunden ist und ein Rotor der zweiten elektrischen Rotationsmaschine drehfest mit der zweiten Welle verbunden ist. Die erste elektrische Rotationsmaschine ist zumindest bereichsweise radial sowie axial innerhalb eines von der zweiten elektrischen Rotationsmaschine radial begrenzten Raums angeordnet. Die erste elektrische Rotationsmaschine ist als Innenläufermotor ausgebildet und die zweite elektrische Rotationsmaschine ist als Außenläufermotor ausgebildet, wobei der Stator der ersten elektrischen Rotationsmaschine sowie der Stator der zweiten elektrischen Rotationsmaschine mechanisch aneinander fixiert sind. Die Antriebseinheit umfasst eine axial neben den Statoren angeordnete Kühlmittel-Zuführungseinrichtung, mit der Kühlmittel zwischen die Statoren axial zuführbar ist.

Das bedeutet, dass die Statoren der beiden elektrischen Rotationsmaschinen radial zwischen den Rotoren der beiden elektrischen Rotationsmaschinen angeordnet sind.

In einer Ausführungsform kann vorgesehen sein, dass die radial innen angeordnete elektrische Rotationsmaschine radial sowie axial vollständig innerhalb eines von der jeweils anderen elektrischen Rotationsmaschine radial begrenzten Raums angeordnet ist.

Insbesondere ist vorgesehen, dass die Antriebseinheit weiterhin eine Trennkupplung aufweist, mit der der Rotor der ersten elektrischen Rotationsmaschine zur Drehmomentübertragung mit der zweiten Welle verbindbar oder verbunden ist.

Die Trennkupplung ist in einem von der ersten elektrischen Rotationsmaschine zur zweiten Welle verlaufenden Drehmoment-Übertragungspfad angeordnet bzw. dazu eingerichtet, diesen Drehmoment-Übertragungspfad zu öffnen und zu schließen. Die Antriebseinheit kann ein Betätigungssystem zur Betätigung der Trennkupplung umfassen, wobei ein Ausrücklager des Betätigungssystems einreihig oder zweireihig ausführbar ist.

Vorteilhafterweise sind die Drehachsen der Rotoren der elektrischen Rotationsmaschinen koaxial positioniert.

Die radiale Verschachtelung der beiden elektrischen Rotationsmaschinen bewirkt den Vorteil, dass bei der Herstellung der einzelnen Bleche des Rotor-Pakets und des Stator-Pakets beider elektrischer Rotationsmaschinen aus einer Platine mit einem Stanz-Hub sowohl ein Blech des Rotors der radial inneren elektrischen Rotationsmaschine als auch des Stators der radial inneren elektrischen Rotationsmaschine und auch des Stators der radial äußeren elektrischen Rotationsmaschine sowie des Rotors der radial äußeren elektrischen Rotationsmaschine ausgeschnitten werden kann.

Der Rotor der radial äußeren elektrischen Rotationsmaschine kann zwecks seiner Verbindung zur zweiten Welle von einem Rotorträger getragen sein, welcher mit der zweiten Welle verbunden ist, wobei der Rotor dabei insbesondere kraft- und/oder formschlüssig mit dem Rotorträger verbunden ist und der Rotorträger kraft- und/oder formschlüssig mit der zweiten Welle verbunden ist.

Zwecks drehbarer Lagerung der ersten Welle und/oder der zweiten Welle kann die Antriebseinheit ein Zentrallager bzw. eine zentrale Lagereinheit aufweisen, welches ein- oder mehrteilig ausgestaltet ist, und mittels welchem die erste Welle und/oder die zweite Welle an einem Gehäuse der Antriebseinheit gelagert sind. Der Rotorträger der radial äußeren elektrischen Rotationsmaschine kann dabei unmittelbar über das Zentrallager gelagert sein oder mittelbar über die zweite Welle am Zentrallager gelagert sein. Das Zentrallager ist beispielsweise als Rollen-, Kugel- oder Schrägkugellager ausgestaltet.

Die Antriebseinheit kann ein Befestigungselement umfassen, welches mit der ersten oder zweiten Welle verschraubt ist, zwecks Sicherung der Position des Rotorträgers der radial äußeren elektrischen Rotationsmaschine in Bezug zur Position der zweiten Welle.

Vorteilhafterweise kann die radial innere elektrische Rotationsmaschine als Generator betrieben werden. Der Rotor der radial inneren elektrischen Rotationsmaschine ist relativ klein ausgeführt und hat somit ein geringeres Massenträgheitsmoment als der Rotor der radial äußeren Rotationsmaschine.

Entsprechend kann die radial äußere elektrische Rotationsmaschine vorteilhafterweise als Antriebseinheit eingesetzt werden, da der Rotor dieser elektrischen Rotationsmaschine relativ groß ist und ein entsprechend großes Drehmoment erzeugen kann.

Damit ist nicht ausgeschlossen, dass sowohl die radial innere elektrische Rotationsmaschine als auch die radial äußere elektrische Rotationsmaschine zwecks Antrieb eines mit der Antriebseinheit ausgestatteten Kraftfahrzeugs einsetzbar ist. Beispielsweise kann die radial innere elektrische Rotationsmaschine dazu eingesetzt werden, Drehmoment an eine Eingangsseite der Antriebseinheit zu leiten, sodass ein Start einer an die Eingangsseite anschließbaren Verbrennungskraftmaschine realisiert werden kann. Alternativ kann auch eine oder können auch beide elektrischen Rotationsmaschinen Drehmoment zur Verfügung stellen und zusammen mit einer angeschlossenen Verbrennungskraftmaschine einen Hybrid-Betrieb der Antriebseinheit realisieren.

**In** einer Ausführungsform ist vorgesehen, dass der Rotor der ersten elektrischen Rotationsmaschine innerhalb eines vom Stator der zweiten elektrischen Rotationsmaschine radial begrenzten Raums angeordnet ist.

Erfindungsgemäß ist vorgesehen, dass die Statoren der beiden elektrischen Rotationsmaschinen auf einem gemeinsamen Stator-Träger angeordnet sind, wobei mittels der Kühlmittel-Zuführungseinrichtung Kühlmittel dem Stator-Träger zuführbar ist und dieser zur Verteilung des Kühlmittels in axialer Richtung ausgestaltet ist.

Es ist hier entsprechend vorgesehen, dass die beiden Statoren radial beidseitig des Stator-Trägers angeordnet sind.

Dabei ist die Verteilung in axialer Richtung nicht darauf eingeschränkt, dass ein Volumenstrom mit lediglich axialer Komponente erzeugt wird, sondern es kann durch den Stator-Träger ein Kühlmittel-Volumenstrom erzeugt werden, der mit zumindest einer Richtungs-Komponente axial verläuft.

Der Stator-Träger ist wiederum an einem Gehäuse der Antriebseinheit fixiert. Insbesondere kann dieser Stator-Träger hinsichtlich seiner radialen Position zwischen den Statoren der beiden elektrischen Rotationsmaschinen angeordnet sein und mit diesen mechanisch verbunden sein, sodass der Stator-Träger beide Statoren fixiert.

Erfindungsgemäß bildet der Stator-Träger an seiner radialen Innenseite und an seiner radialen Außenseite einen helixförmigen Kanal zur Leitung von Kühlmittel aus.

Der Stator-Träger ist ein Bauteil mit im Wesentlichen Hohlzylinderform und weist somit eine radiale Innenseite und eine radiale Außenseite auf. Der Kanal kann durch eine Nut an der jeweiligen Seite des Stator-Trägers ausgebildet sein, die bei Anlage des jeweiligen Stator-Pakets bzw. dessen Körpers an der jeweiligen Seite des Stator-Trägers an der Außenseite geschlossen ist und somit einen Kanal ausbildet.

Weiterhin erfindungsgemäß ist zumindest ein radialer Verbindungskanal zwischen dem helixförmigen Kanal an der radialen Innenseite und dem helixförmigen Kanal an der radialen Außenseite vorhanden.

Diese Ausführungsform dient der effizienten Kühlung beider Statoren durch im Stator-Träger ausgebildete Nuten bzw. Kanäle.

Des Weiteren kann die Kühlmittel-Zuführungseinrichtung eine axial neben den elektrischen Rotationsmaschinen angeordnete Verteilungseinrichtung umfassen, zur Zuführung von Kühlmittel zum Stator-Träger, wobei die Verteilungseinrichtung mittels wenigstens einer Verbindungshülse mit einem zumindest einem axial in dem Stator-Träger ausgeführten Verbindungskanal strömungstechnisch gekoppelt ist.

Der axiale Verbindungskanal ist wiederum strömungstechnisch mit dem helixförmigen Kanal verbunden.

Bei Anordnung von mehreren axialen Verbindungskanälen sind diese mit mehreren helixförmigen Kanälen strömungstechnisch gekoppelt.

Die Verteilungseinrichtung kann durch einen Ringkanal ausgeführt sein, der in oder an einem Gehäuse der Antriebseinheit ausgebildet ist.

Insbesondere ist die Verteilungseinrichtung integraler Bestandteil eines Gehäuses, an welchem der Stator-Träger fixiert ist.

In einer alternativen Ausführungsform der Kühlmittel-Zuführungseinrichtung kann anstelle einer Verbindungshülse vorgesehen sein, dass der Stator-Träger derart an dem die Verteilungseinrichtung ausbildenden Gehäuse anliegt, dass die Verteilungseinrichtung und der axial im Stator-Träger ausgeführte Verbindungskanal im Wesentlichen unmittelbar strömungstechnisch miteinander gekoppelt sind. Vorteilhafterweise sollte eine Dichtung, z.B. ausgeführt als Dichtring, zwischen Stator-Träger und dem die Verteilungseinrichtung ausbildenden Gehäuse angeordnet sein, damit die strömungstechnische Verbindung zwischen Verteilungseinrichtung und Verbindungskanal gegenüber dem Umfeld abgedichtet ist.

Die Statoren der beiden elektrischen Rotationsmaschinen sind in einer alternativen Ausführungsform der vorliegenden Antriebseinheit integrale Bestandteile einer Stator-Einheit, wobei die Kühlmittel-Zuführungseinrichtung einen Ringkanal umfasst, der mehrere Kühlmittel-Teilströme erzeugende Axial-Auslässe aufweist, mit denen Strömungskanäle in wenigstens einem der Statoren strömungstechnisch gekoppelt sind.

Ein derartiger Strömungskanal kann durch eine axiale Bohrung in einem jeweiligen Stator ausgeführt sein.

Insbesondere sind derartige Strömungskanäle radial zwischen dem Stator der ersten elektrischen Rotationsmaschine und dem Stator der zweiten elektrischen Rotationsmaschine angeordnet. Das bedeutet, dass Kühlmittel in der Stator-Einheit derart geführt ist, dass eine optimale Kühlung beider Statoren im Wesentlichen gleichermaßen realisiert ist.

Der Ringkanal kann dabei von einem Kunststoffteil realisiert sein. Insbesondere entspricht der Ringkanal einem ringförmigen Rohr. Es kann auch vorgesehen sein, dass der Ringkanal als integraler Bestandteil eines Gehäuses ausgebildet ist.

Die Stator-Einheit kann wiederum an einem Gehäuse der Antriebseinheit fixiert sein. Diese alternative Ausgestaltungsform nutzt also keinen extra Stator-Träger zwischen den einzelnen Statoren, sondern umfasst eine kompakte Einheit, die lediglich durch die beiden Statoren ausgebildet ist.

Die Fixierung der Stator-Einheit an einem Gehäuse der Antriebseinheit kann durch mehrere Schraubverbindungen realisiert sein. Eine jeweilige Schraube einer Schraubverbindung ist dabei insbesondere in axialer Richtung durch die Stator-Einheit durchgeführt und in einem Gehäuse der Antriebseinheit verschraubt.

**In** einer Ausführungsform der Antriebseinheit umfasst diese ein erstes Gehäuse sowie ein zweites Gehäuse, welche zusammen einen Gehäuseinnenraum definieren, in welchem die beiden elektrischen Rotationsmaschinen angeordnet sind und in welchem die erste Welle und die zweite Welle zumindest bereichsweise angeordnet sind.

Insbesondere sind ein gemeinsamer Stator-Träger oder eine Stator-Einheit mit dem ersten Gehäuse mechanisch verbunden, wobei die Rotoren der beiden elektrischen Rotationsmaschinen am zweiten Gehäuse gelagert sind.

Insbesondere kann die zweite Welle am zweiten Gehäuse gelagert sein, wobei die erste Welle am ersten Gehäuse und an der zweiten Welle gelagert sein kann.

Zudem kann eine Leistungselektronik zur Steuerung der elektrischen Rotationsmaschinen vom zweiten Gehäuse getragen sein.

Des Weiteren kann die erste Welle einen axial verlaufenden Wellen-Strömungskanal aufweisen, an den sich mit radialer Erstreckung wenigstens eine erste Querbohrung anschließt, durch die Kühlmittel aus dem Wellen-Strömungskanal dem Rotor der ersten elektrischen Rotationsmaschine zuführbar ist.

Insbesondere kann wenigstens eine erste Querbohrung in radialer Richtung vom Rotor der ersten elektrischen Rotationsmaschine überlagert sein, so dass dieser Rotor optimal vom Kühlmittel kühlbar ist. Vorteilhafterweise ist dazu ein sich axialer erstreckender Kühlkanal in radialer Richtung zwischen der ersten Welle und dem Rotor vorgesehen, welcher strömungstechnisch mit der wenigstens einen ersten Querbohrung gekoppelt ist, so dass sich zwischen den beiden axialen Stirnseiten des Rotors an den Rotor strömendes Kühlmittel möglichst gleichmäßig über die axiale Erstreckung des Rotors verteilt.

In einer Ausgestaltung kann die erste Welle mehrere erste Querbohrungen mit radialer Erstreckung aufweisen, wobei vorgesehen ist, dass die ersten Querbohrungen in regelmäßigen Winkelabständen zueinander am Umfang enden und eine Gruppe von ersten Querbohrungen eine im Wesentlichen identische axiale Position aufweisen. Diese axiale Position kann insbesondere einer axial mittigen Position in Bezug zum Rotor entsprechen.

Insbesondere kann vorgesehen sein, dass wenigstens eine erste Querbohrung in radialer Richtung von einem ersten Rotorträger zur drehbaren Anordnung des Rotors der ersten elektrischen Rotationsmaschine überlagert ist, wobei dieser erste Rotorträger Nuten und/oder Bohrungen aufweist zur axialen Verteilung des Kühlmittels in oder an dem Rotor der ersten elektrischen Rotationsmaschine.

Gemäß einer weiteren Ausführungsform ist der Rotor der zweiten elektrischen Rotationsmaschine mittels eines Rotorträgers drehbar gelagert, wobei dieser Rotorträger Nuten und/oder Bohrungen aufweist zur axialen Verteilung des Kühlmittels in oder an dem Rotor der zweiten elektrischen Rotationsmaschine.

Alternativ oder ergänzend kann vorgesehen sein, dass der Rotor der zweiten elektrischen Rotationsmaschine Nuten und/oder Bohrungen aufweist zum gleichen Zweck.

Das Kühlmittel wird insbesondere mittels Fliehkraft nach radial außen an den Rotor der zweiten elektrischen Rotationsmaschine heran getragen, wobei das Kühlmittel dabei vorzugsweise entlang eines radialen Abschnitts des im Wesentlichen topfförmig ausgestalteten Rotorträgers fließt.

Außerdem sammelt sich das Kühlmittel schwerkraftbedingt im topfförmigen Rotorträger und wird bei Drehbewegung des Rotorträgers dann am Umfang entlang verteilt.

Insbesondere ist vorgesehen, dass Nuten an einer radialen Position radial außen am Rotor der zweiten elektrischen Rotationsmaschine ausgebildet sind und/oder an der Anlagefläche des Rotors der zweiten elektrischen Rotationsmaschine am Rotorträger ausgebildet sind. Bohrungen im Rotor können in Bezug auf die Nuten radial weiter innen im Rotor realisiert sein, wodurch die Bohrungen näher am Bereich der größten Wärmeentwicklung sind als die Nuten, so dass in derartigen Bohrungen geführtes Kühlmittel eine effizientere Kühlwirkung realisieren kann.

Weiterhin kann in der ersten Welle wenigstens eine weitere Querbohrung ausgebildet sein zwecks Ausströmung von Kühlmittel axial neben den elektrischen Rotationsmaschinen.

Das aus der wenigstens einen weiteren Querbohrung ausströmende Kühlmittel kann genutzt werden, um z.B. eine Kühlung der Trennkupplung und/oder eine Kühlung von Lagern, wie z.B. der zentralen Lagereinheit, zu realisieren.

Insbesondere können mehrere weitere Querbohrungen ausgebildet sein, wobei diese mehreren weiteren Querbohrungen auf gleicher axialer Position am Umfang verteilt und/oder auf unterschiedlichen axialen Positionen angeordnet sind. Eine weitere Querbohrung kann auch dazu dienen, Kühlmittel zum Zweck der Kühlung des Rotors der zweiten elektrischen Rotationsmaschine auszugeben.

Der Stator-Träger bzw. einzelne Strömungskanäle in den Statoren können wenigstens einen auf die Wickelköpfe des betreffenden Stators gerichteten Auslass aufweisen, um mittels einem aus dem Stator-Träger bzw. einem Stator selbst austretenden Fluid-Volumenstrom eine Kühlung von Wickelköpfen des Stators zu ermöglichen.

Die beiden Wellen der Antriebseinheit sind vorteilhafterweise koaxial angeordnet. Zu diesem Zweck ist insbesondere vorgesehen, dass sie zweite Welle als Hohlwelle ausgestaltet ist und die erste Welle abschnittsweise innerhalb der zweiten Welle verläuft.

Des Weiteren kann die Antriebseinheit eine erste Übersetzungsstufe umfassen, wobei die erste Übersetzungsstufe durch ein Anschlusselement der Antriebseinheit, welches ein innenverzahntes Zahnrad umfasst, und die erste Welle, welche ein Element mit einer Außenverzahnung aufweist, ausgebildet ist. Die Verzahnung des innenverzahnten Zahnrades sowie die Außenverzahnung kämmen zwecks Übertragung der Drehbewegung vom Anschlusselement auf die erste Welle miteinander.

Entsprechend ist die erfindungsgemäße Antriebseinheit als ein sogenanntes HybridGetriebe ausgestaltet. Das bedeutet also, dass die Antriebseinheit neben den elektrischen Rotationsmaschinen und den Wellen auch ein Getriebe umfasst. Insbesondere kann das Element mit der Außenverzahnung ein drehfest auf der ersten Welle angeordnetes Zahnrad sein.

Zudem kann die Antriebseinheit eine zweite Übersetzungsstufe aufweisen, welche durch eine Verzahnung, insbesondere eine Außenverzahnung, der zweiten Welle und ein erstes, mit der Verzahnung der zweiten Welle kämmendes, Zahnrad ausgebildet ist.

In einer Ausführungsform, in der die Antriebseinheit ein Getriebe aufweist, kann das erste Zahnrad drehfest mit einer Zwischenwelle des Getriebes gekoppelt sein.

Dieses Getriebe kann im Abtriebsbereich ein Differenzial-Getriebe umfassen. Dabei kann eine Außenverzahnung der Zwischenwelle mit einem Eingangs-Zahnrad des Differenzial-Getriebes kämmen, wodurch eine dritte Übersetzungsstufe realisiert wird.

Die zweite Welle fungiert somit hier als Getriebeeingangswelle und steht mit dem Getriebe in Wirkverbindung, so dass ein von der zweiten Welle zur Verfügung gestelltes Drehmoment bzw. die von der zweiten Welle realisierte Drehbewegung über das Getriebe über- oder untersetzt an eine weitere Getriebeeinheit eines Kraftfahrzeugs geleitet werden kann, oder auch direkt auf Antriebsräder eines Kraftfahrzeuges geleitet werden kann.

Die erfindungsgemäße Antriebseinheit weist den Vorteil auf, dass durch die radiale Schachtelung der elektrischen Rotationsmaschinen axial deutlich weniger Bauraum benötigt wird als in herkömmlichen Antriebseinheiten mit zwei elektrischen Rotationsmaschinen, wobei die erfindungsgemäß vorgesehene Kühlmittel-Zuführungseinrichtung eine optimale Kühlung der Statoren und der Rotoren der beiden geschachtelten elektrischen Rotationsmaschinen gewährleistet.

Ein weiterer Aspekt der vorliegenden Erfindung ist eine Antriebsanordnung mit einer erfindungsgemäßen Antriebseinheit sowie mit einer Verbrennungskraftmaschine, die mittels eines Abtriebselements der Verbrennungskraftmaschine drehfest mit dem Rotor der ersten elektrischen Rotationsmaschine gekoppelt oder koppelbar ist.

Die Antriebsanordnung kann einen mit dem Anschlusselement der Antriebseinheit drehfest verbundenen Schwingungsdämpfer sowie ein mechanisch an die Verbrennungskraftmaschine angeschlossenes Gehäuseelement umfassen, wobei der Schwingungsdämpfer in dem Gehäuseelement angeordnet ist.

Das Gehäuseelement ist dabei vorteilhafterweise an das zweite Gehäuse der Antriebseinheit angeschlossen.

Weiterhin kann vorgesehen sein, die Zwischenwelle und/oder die Radantriebswelle axial einerseits im Gehäuseelement und andererseits im zweiten Gehäuse zu lagern.

Im Betrieb eines Kraftfahrzeugs, insbesondere eines Hybridfahrzeugs, mit einer erfindungsgemäßen Antriebsanordnung, umfassend eine erfindungsgemäße Antriebseinheit sowie eine Verbrennungskraftmaschine, werden z.B. folgende Fahrbetriebsmodi ermöglicht:
- Elektrisches Fahren und Rekuperieren:
   Die Trennkupplung ist geöffnet, wodurch die zweite elektrische Rotationsmaschine von der ersten elektrischen Rotationsmaschine und der Verbrennungskraftmaschine abgekoppelt ist. Die zweite elektrische Rotationsmaschine wird somit separat als Traktionsmaschine oder als Generator angesteuert. Die Verbrennungskraftmaschine und die erste elektrische Rotationsmaschine sind nicht in Betrieb.
- Seriell Fahren und Laden:
   Die Trennkupplung ist geöffnet. Die Verbrennungskraftmaschine wird mittels der ersten elektrischen Rotationsmaschine gestartet, wobei die Verbrennungskraftmaschine die erste elektrische Rotationsmaschine antreiben kann und folglich die erste elektrische Rotationsmaschine als Generator angesteuert wird, um die Batterie des Kraftfahrzeugs zu laden. Die zweite elektrische Rotationsmaschine wird als Traktionsmaschine angesteuert.
- Parallel Hybridantrieb, Laden und Boosten:
   Die Trennkupplung ist geschlossen, wodurch die erste elektrische Rotationsmaschine, die zweite elektrische Rotationsmaschine sowie die Verbrennungskraftmaschine miteinander gekoppelt sind. Das Kraftfahrzeug wird mittels der Verbrennungskraftmaschine und / oder einer oder beider elektrischen Rotationsmaschinen angetrieben. Die beiden elektrischen Rotationsmaschinen können hier als Traktionsmaschine oder als Generator angesteuert werden.

In weiterer Ausgestaltung umfasst die Antriebsanordnung auch wenigstens eine Radantriebswelle, an welcher Räder eines mit der Antriebsanordnung ausgestalteten Kraftfahrzeugs anzuordnen sind, und welche über das Getriebe der Antriebseinheit mit der zweiten Welle der Antriebseinheit verbunden ist, sodass eine von der zweiten Welle realisierte Drehbewegung durch das Getriebe auf die Radantriebswelle und damit auf die Räder übertragen werden kann.

Die Kühlmittel-Zuführungseinrichtung der Antriebseinheit ist dabei strömungstechnisch mit einem Kühlkreislauf der Antriebsanordnung gekoppelt bzw. Teil des Kühlkreislaufs der Antriebsanordnung. Ein Pumpenaktor bewirkt dabei eine Zirkulation eines Kühlmittels im Kühlkreislauf, wobei ein Wärmetauscher eine Wärmeübertragung ermöglicht.

Im Gehäuseelement kann der Pumpenaktor gelagert sein und radial außen auf dem zweiten Gehäuse kann der Wärmetauscher angeordnet sein.

Der Transport eines Kühlmittels im Kühlkreislauf kann dabei derart erfolgen, dass der Pumpenaktor aus einem sogenannten Kühlmittel-Sumpf bzw. Kühlmittel-Reservoir, in welchem das Kühlmittel nach Wärmeaufnahme aufgefangen/zwischengelagert wird, warmes Kühlmittel ansaugt. Das warme Kühlmittel wird durch den Pumpenaktor zum Wärmetauscher geführt, wo es Wärme abgibt. Das nun gekühlte Kühlmittel wird über das zweite Gehäuse in das erste Gehäuse geführt und dort an die Kühlmittel-Zuführungseinrichtung sowie in den axial verlaufenden Wellen-Strömungskanal in der ersten Welle geleitet.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Fig. 1:: eine schematische Darstellung einer erfindungsgemäßen Antriebsanordnung mit erfindungsgemäßer Antriebseinheit,
- Fig. 2:: ein Ausschnitt der erfindungsgemäßen Antriebsanordnung in geschnittener Seitenansicht,
- Fig. 3:: ein Ausschnitt der erfindungsgemäßen Antriebseinheit im Bereich der elektrischen Rotationsmaschinen,
- Fig. 4:: ein Ausschnitt einer erfindungsgemäßen Antriebseinheit im Bereich der elektrischen Rotationsmaschinen in einer alternativen Ausführungsform,
- Fig. 5:: ein Ausschnitt der erfindungsgemäßen Antriebsanordnung mit der erfindungsgemäßen Antriebseinheit in geschnittener Seitenansicht mit hervorgehobenem Kühlmittel-Fluss,
- Fig. 6:: ein Ausschnitt der erfindungsgemäßen Antriebseinheit im Bereich der elektrischen Rotationsmaschinen mit hervorgehobenem Kühlmittel-Fluss und
- Fig. 7:: ein Ausschnitt der erfindungsgemäßen Antriebseinheit im Bereich der elektrischen Rotationsmaschinen in der alternativen Ausführungsform mit hervorgehobenem Kühlmittel-Fluss.

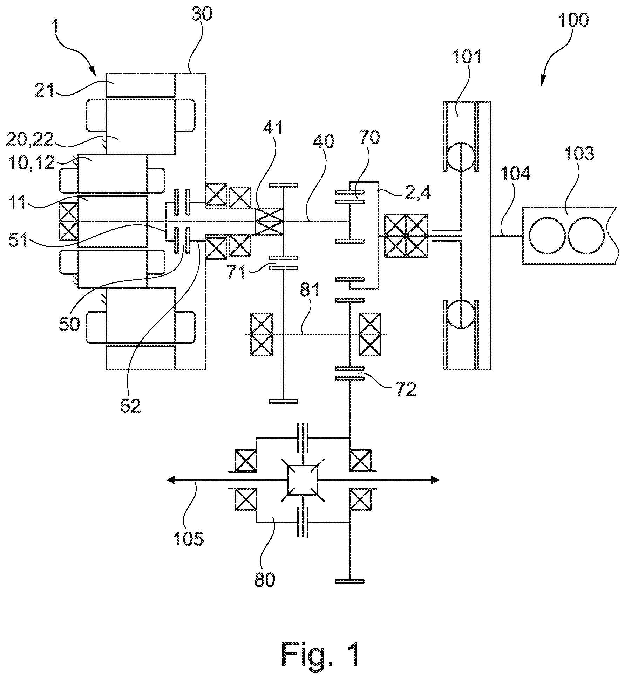

In den Figuren 1 bis 4 ist die Antriebsanordnung zunächst zur allgemeinen Erklärung ohne Bezug auf die Kühlung bzw. Kühlmittel-Zuführungseinrichtung dargestellt.

In Fig. 1 ist eine schematische Darstellung einer erfindungsgemäßen Antriebsanordnung 100 mit einer erfindungsgemäßen Antriebseinheit 1 dargestellt. Die Antriebseinheit 1 umfasst eine erste elektrische Rotationsmaschine 10, eine zweite elektrische Rotationsmaschine 20, eine erste Welle 40 sowie eine zweite Welle 41.

Des Weiteren umfasst die Antriebsanordnung 100 eine Verbrennungskraftmaschine 103 und einen Schwingungsdämpfer 101, wobei ein Abtriebselement 104 der Verbrennungskraftmaschine 103 mit dem Schwingungsdämpfer 101 gekoppelt ist. Der Schwingungsdämpfer 101 ist außerdem mit einem Anschlusselement 4 der Antriebsanordnung 1 verbunden, welches als eine Eingangsseite 2 der Antriebsanordnung 1 fungiert. Die Verbrennungskraftmaschine 103 ist damit über den Schwingungsdämpfer 104 mit der Antriebsanordnung 1 gekoppelt.

Das Anschlusselement 4 ist mit der ersten Welle 40 derart gekoppelt, dass eine erste Übersetzungsstufe 70 zwischen dem Anschlusselement 4 und der ersten Welle 40 ausgebildet ist.

Ein Rotor 11 der ersten elektrische Rotationsmaschine 10 ist mit der ersten Welle 40 drehfest verbunden und ein Rotor 21 der zweiten elektrische Rotationsmaschine 20 ist mit der zweiten Welle 41 drehfest verbunden. Die Verbindung des Rotors 11 der ersten elektrischen Rotationsmaschine 10 mit der ersten Welle 40 ist derart realisiert, dass der Rotor 11 der ersten elektrische Rotationsmaschine 10 direkt auf der ersten Welle 40 angeordnet ist. Der Rotor 21 der zweiten elektrischen Rotationsmaschine 20 ist hingegen von einem Rotorträger 30 getragen und der Rotorträger 30 ist mit der zweiten Welle 41 verbunden.

Die erste elektrische Rotationsmaschine 10 ist radial sowie bereichsweise axial innerhalb eines von der zweiten elektrischen Rotationsmaschine 20 radial begrenzten Raums angeordnet. Dabei ist die erste elektrische Rotationsmaschine 10 als Innenläufermotor ausgebildet und die zweite elektrische Rotationsmaschine 20 als Außenläufermotor ausgebildet, wobei ein Stator 12 der ersten elektrischen Rotationsmaschine 10 sowie ein Stator 22 der zweiten elektrischen Rotationsmaschine 20 mechanisch aneinander fixiert sind.

Eine Trennkupplung 50 der Antriebseinheit 1 ist mit ihrer Eingangsseite 51 mit der ersten Welle 40 verbunden und mit ihrer Ausgangsseite 52 mit der zweiten Welle 41 verbunden. Die Trennkupplung 50 dient somit zur Drehmomentübertragung zwischen der ersten Welle 40 und der zweiten Welle 41. Entsprechend kann mittels der Trennkupplung 50 ein Drehmoment-Übertagungspfad zwischen dem Rotor 11 der ersten elektrischen Rotationsmaschine 10 und dem Rotor 21 der zweiten elektrischen Rotationsmaschine 20 geöffnet oder geschlossen werden.

Die zweite Welle 41 ist als Hohlwelle ausgestaltet und die erste Welle 40 verläuft abschnittsweise radial innerhalb der zweiten Welle 41. Die beiden Wellen 40, 41 verlaufen somit koaxial zueinander, wobei auch die Rotoren 11, 21 der beiden elektrischen Rotationsmaschinen 10, 20 koaxial zueinander und koaxial zu den Wellen 40, 41 angeordnet sind.

Die zweite Welle 41 ist über eine zweite Übersetzungsstufe 71 mit einer Zwischenwelle 81 verbunden. Die Zwischenwelle 81 verläuft dabei parallel zur zweiten Welle 41.

Die Zwischenwelle 81 ist über eine dritte Übersetzungsstufe 72 mit einem Eingangselement eines Differentialgetriebes 80 der Antriebseinheit 1 zwecks Übertragung von Drehmoment verbunden. Das Differentialgetriebe 80 bildet eine Ausgangsseite 3 der Antriebseinheit 1.

Eine Radantriebswelle 105, an welcher Räder eines mit der Antriebsanordnung 100 ausgestatteten Kraftfahrzeugs anzuordnen sind, bildet den Ausgang des Differentialgetriebes 80, so dass eine von der zweiten Welle 41 realisierte Drehbewegung über die zweite Übersetzungsstufe 71 und die dritte Übersetzungsstufe 72 sowie über das Differenzialgetriebe 80 auf die Radantriebswelle 105 und damit auf die Räder übertragen werden kann.

Ein von der Verbrennungskraftmaschine 103 bereitgestelltes Drehmoment wird über den Schwingungsdämpfer 101 und über die erste Übersetzungsstufe 70 an die erste Welle 40 der Antriebseinheit 1 übertragen. Ist die Trennkupplung 50 dabei geöffnet, wird das Drehmoment der Verbrennungskraftmaschine 103 lediglich an den Rotor 11 der ersten elektrischen Rotationsmaschine 10 geleitet. Derart kann die erste elektrische Rotationsmaschine 10 im Generatorbetrieb zum Laden einer Batterie genutzt werden. Ist die Trennkupplung 50 geschlossen, wird das von der Verbrennungskraftmaschine 103 bereitgestellte Drehmoment von der ersten Welle 40 auf die zweite Welle 41 übertragen. Von der zweiten Welle 41 wird das Drehmoment der Verbrennungskraftmaschine 103 über die zweite Übersetzungsstufe 71 auf die Zwischenwelle 81 und über die dritte Übersetzungsstufe 72 in das Differentialgetriebe 80 geleitet. Über das Differentialgetriebe 80 gelangt das Drehmoment mittels der Radantriebswelle 103 an Räder eines mit der Antriebsanordnung 100 ausgestatteten Kraftfahrzeugs.

Ein vom Rotor 11 der ersten elektrischen Rotationsmaschine 10 bereitgestelltes Drehmoment kann bei geöffneter Trennkupplung 50 über die erste Übersetzungsstufe 70 an die Verbrennungskraftmaschine 103 übertragen werden. Bei geschlossener Trennkupplung 50 über die zweite Übersetzungsstufe 71 und die dritte Übersetzungsstufe 72 an das Differentialgetriebe 80 und damit an die Radantriebswelle 105 übertragen.

Ein vom Rotor 21 der zweiten elektrischen Rotationsmaschine 20 bereitgestelltes Drehmoment wird unabhängig einer Schaltung der Trennkupplung 50 über die zweite Übersetzungsstufe 71 und die dritte Übersetzungsstufe 72 an das Differentialgetriebe 80 und damit an die Radantriebswelle 105 übertragen.

Die Antriebsanordnung 100 kann entsprechend in einer Vielzahl an Fahrbetriebsmodi betrieben werden.

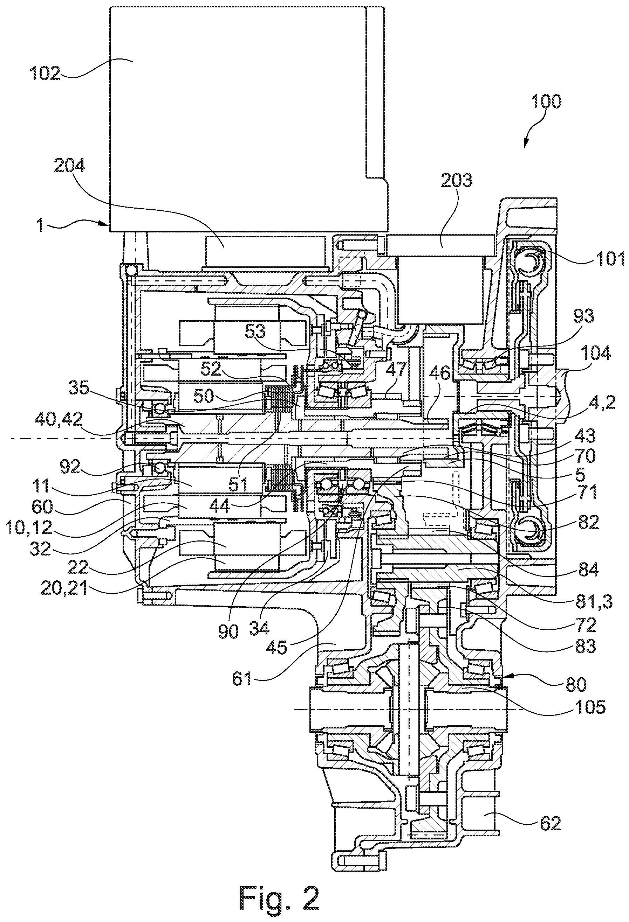

Fig. 2 zeigt einen Ausschnitt der erfindungsgemäßen Antriebsanordnung 100 in geschnittener Seitenansicht. Die Figur 2 ist eine detailliertere Darstellung einzelner der in Figur 1 angedeuteten Komponenten, wobei in Figur 2 die Verbrennungskraftmaschine nicht gezeigt ist und das an den Schwingungsdämpfer 101 gekoppelte Abtriebselement 104 der Verbrennungskraftmaschine nur teilweise dargestellt ist.

In Figur 2 sind ein erstes Gehäuse 60, ein zweites Gehäuse 61 sowie ein Gehäuseelement 62 erkennbar, welche miteinander verbunden sind und ein Gesamt-Gehäuse der Antriebsanordnung 100 bzw. der Antriebseinheit 1 ausbilden. Das erste und zweite Gehäuse 60, 61 dienen der Aufnahme der beiden elektrischen Rotationsmaschinen 10, 20, wobei das Gehäuseelement 62 dazu dient, das erste Gehäuse 60 und das zweite Gehäuse 61 mit einem Gehäuse der Verbrennungskraftmaschine (nicht dargestellt) zu koppeln. Das erste Gehäuse 60 ist dazu in axialer Richtung fest mit dem zweiten Gehäuse 61 verbunden, wobei das Gehäuseelement 62 auf der dem ersten Gehäuse 60 axial gegenüberliegenden Seite des zweiten Gehäuses 61 mit dem zweiten Gehäuse 61 fest verbunden ist.

Die erste Welle 40 ist mit ihrem ersten axialen Endbereich 42 über ein einreihiges Stützlager 92 im ersten Gehäuse 60 gelagert und mit ihrem zweiten axialen Endbereich 43 über ein Nadellager 91 radial innen an einem zweiten axialen Endbereich 45 der zweiten Welle 41 gelagert.

Die zweite Welle 41 ist mit ihrem ersten axialen Endbereich 44 über eine zentrale Lagereinheit 90 am zweiten Gehäuse 61 gelagert. Diese zentrale Lagereinheit 90 umfasst zwei koaxial angeordnete Wälzlager, die axial dicht nebeneinander positioniert sind.

Weiterhin ist ein die Statoren 12, 22 der elektrischen Rotationsmaschinen 10, 20 tragender gemeinsamer Stator-Träger 32 fest mit dem ersten Gehäuse 60 verbunden, so dass die Statoren 12, 22 der elektrischen Rotationsmaschinen 10, 20 vom ersten Gehäuse 60 getragen sind. Der Rotorträger 30 des Rotors 21 der zweiten elektrischen Rotationsmaschine 20 ist mittels eines Wälzlagers der zentralen Lagereinheit 90 am zweiten Gehäuse 61 gelagert. Mit dem Rotorträger 30 ist zudem ein Geberelement eines Rotorlagesensors 34 verbunden, wobei ein Detektorelement des Rotorlagesensors 34 mit dem zweiten Gehäuse 61 verbunden ist, so dass eine Detektion einer Winkelposition und/oder einer Drehgeschwindigkeit des Rotors 21 der zweiten elektrischen Rotationsmaschine 20 bzw. des Rotorträgers 30 von dem Rotorlagesensor 34 durchführbar ist.

Außerdem sind die Zwischenwelle 81 und die Radantriebswelle 105 jeweils auf ihrer den elektrischen Rotationsmaschinen 10, 20 zugewandten axialen Seite im zweiten Gehäuse 61 gelagert und an deren gegenüberliegenden axialen Seite im Gehäuseelement 62 gelagert. Das Anschlusselement 4 der Antriebseinheit 1 ist über eine zweireihige Lagereinheit 93 am Gehäuseelement 62 gelagert. Diese zweireihige Lagereinheit 93 umfasst zwei koaxial angeordnete Wälzlager, die axial dicht nebeneinander positioniert sind. Der Schwingungsdämpfer 101 ist im Gehäuseelement 62 angeordnet.

Die zentrale Lagereinheit 90 sowie das zweireihige Lagereinheit 93 sind dabei zur Verdeutlichung ihrer möglichen Ausgestaltungsformen jeweils in unterschiedlichen, möglichen Ausführungen dargestellt. Die zentrale Lagereinheit 90 ist mit Kegelrollenlagern und mit Schrägkugellagern gezeigt, wobei die zweireihige Lagereinheit 93 mit Kegelrollenlagern gezeigt ist. Allerdings können auch hier, wie zur zentralen Lagereinheit 90 erwähnt, andere Lager eingesetzt werden, wie z.B. Schrägkugellager.

Des Weiteren ist eine Leistungselektronik 102 radial außen auf dem ersten und zweiten Gehäuse 60, 61 angeordnet, wobei die Leistungselektronik 102 zur Steuerung der elektrischen Rotationsmaschinen 10, 20 eingerichtet ist. Zwischen dem zweiten Gehäuse 61 und der Leistungselektronik 102 ist zudem ein Wärmetauscher 204 eines Kühlkreislaufs zur Kühlung zumindest einer der elektrischen Rotationsmaschinen 10, 20 am zweiten Gehäuse 61 angeordnet. Ein Pumpenaktor 203 dieses Kühlkreislaufs ist vom Gehäuseelement 62 getragen.

Figur 2 zeigt außerdem einen detaillierten Aufbau der Übersetzungsstufen 70, 71, 72. Die erste Übersetzungsstufe 70 ist derart ausgebildet, dass das Anschlusselement 4 ein innenverzahntes Zahnrad 5 umfasst, welches mit einer Außenverzahnung 46 am zweiten axialen Endbereich 43 der ersten Welle 40 kämmt.

Die zweite Welle 41 weist ebenfalls eine Außenverzahnung 47 an deren zweitem axialen Endbereich 45 auf, mit welcher sie mit einem ersten Zahnrad 82 in Eingriff steht, wobei das erste Zahnrad 82 drehfest auf der Zwischenwelle 81 angeordnet ist, so dass die zweite Übersetzungsstufe 71 zwischen der zweiten Welle 41 und der Zwischenwelle 81 ausgebildet ist.

Eine Außenverzahnung 84 der Zwischenwelle 81 steht mit einem zweiten Zahnrad 83 als Eingangselement des Differentialgetriebes 80 in Eingriff, wodurch die dritte Übersetzungsstufe 72 zwischen der Zwischenwelle 81 und dem Differentialgetriebe 80 ausgebildet ist.

Die Trennkupplung 50 entspricht einer reibschlüssig schließbaren Lamellenkupplung, deren Eingangsseite 51 durch Innenlamellen ausgebildet ist, welche axial neben dem Rotor 11 der ersten elektrischen Rotationsmaschine 10 auf der ersten Welle 40 angeordnet sind, wobei Außenlamellen der Trennkupplung 50 als deren Ausgangsseite 52 mit der zweiten Welle 41 verbunden sind.

Radial außerhalb der zentralen Lagereinheit 90 ist ein Betätigungssystem 53 zur Betätigung der Trennkupplung 50 am zweiten Gehäuse 61 angeordnet, wobei ein Drucktopf des Betätigungssystems 53 axial durch den Rotorträger 30 hindurch greift, um eine vom Betätigungssystem 53 bereitgestellte Betätigungskraft an die Trennkupplung 50 zwecks deren Schließung zu übertragen.

Weiterhin ist eine Sicherungsschraube 35 vorgesehen, welche am ersten axialen Endbereich 44 der zweiten Welle 41 in diese eingeschraubt ist, so dass ein Schraubenkopf der Sicherungsschraube 35 eine axial wirkende Vorspannkraft auf den Rotorträger 30 und die beiden Wälzlager der zentralen Lagereinheit 90 wirkt, wodurch die axiale Position des Rotorträgers 30 und der zentralen Lagereinheit 90 in Bezug zur zweiten Welle 41 gesichert ist.

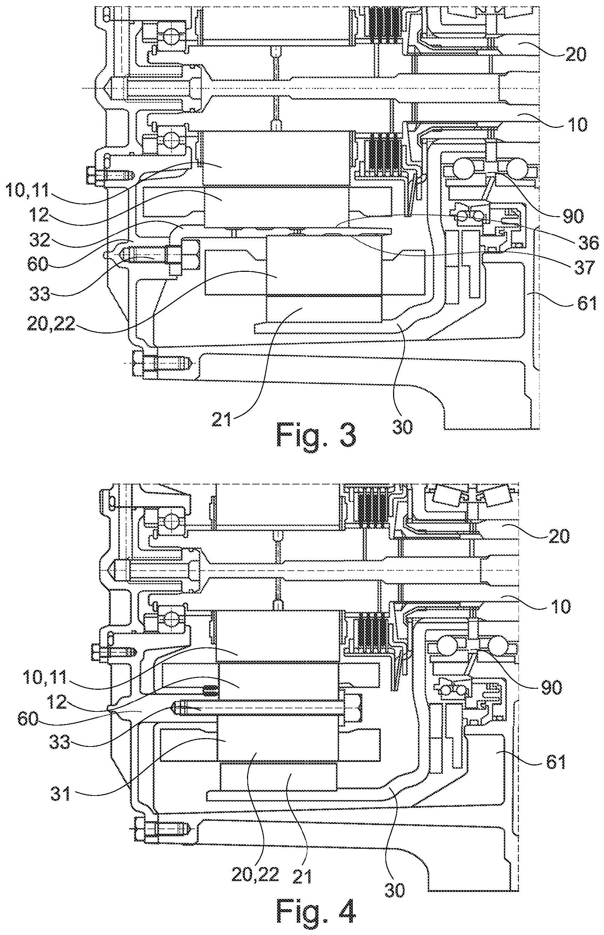

In Fig. 3 ist ein Ausschnitt einer erfindungsgemäßen Antriebseinheit 1 im Bereich der elektrischen Rotationsmaschinen 10, 20 dargestellt. Der Ausschnitt zeigt eine Antriebseinheit 1, identisch zur Ausführungsform der Antriebseinheit 1 aus Figur 2.

Zu sehen ist in Figur 3, dass der gemeinsame Stator-Träger 32 mittels einer Trägerschraube 33 mit dem ersten Gehäuse 60 verbunden ist. Dazu ist die Trägerschraube 33 axial durch einen radial verlaufenden Abschnitt des gemeinsamen Stator-Trägers 32 geführt und in axialer Richtung im ersten Gehäuse 60 verschraubt. Zudem ist der auf der radialen Innenseite 36 des gemeinsamen Stator-Trägers 32 getragene Stator 12 der ersten elektrischen Rotationsmaschine 10 axial versetzt zum auf der radialen Außenseite 37 des gemeinsamen Stator-Trägers 32 getragenen Stator 22 der zweiten elektrischen Rotationsmaschine 20.

Alternativ zur Antriebseinheit 1 aus Figur 3 zeigt Figur 4 einen Ausschnitt einer erfindungsgemäßen Antriebseinheit 1 im Bereich der elektrischen Rotationsmaschinen 10, 20 in einer alternativen Ausführungsform.

Unterschiedlich zur Figur 3 ist hier, dass die Statoren 12, 22 der beiden elektrischen Rotationsmaschinen 10, 20 integrale Bestandteile einer Stator-Einheit 31 sind.

Diese Stator-Einheit 31 ist am ersten Gehäuse 60 durch eine Trägerschraube 33 fixiert, die in axialer Richtung durch die gesamte Stator-Einheit 31 hindurchgeführt ist und im ersten Gehäuse 60 in axialer Richtung verschraubt ist. Diese alternative Ausführungsform nutzt also keinen extra Stator-Träger zwischen den einzelnen Statoren 12, 22, sondern umfasst eine kompakte Einheit, die lediglich durch die beiden Statoren 12, 22 ausgebildet ist.

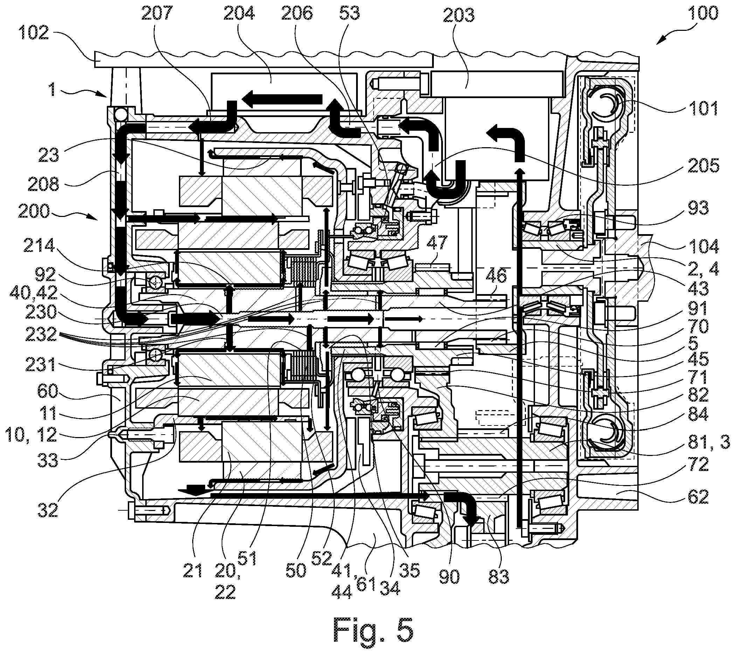

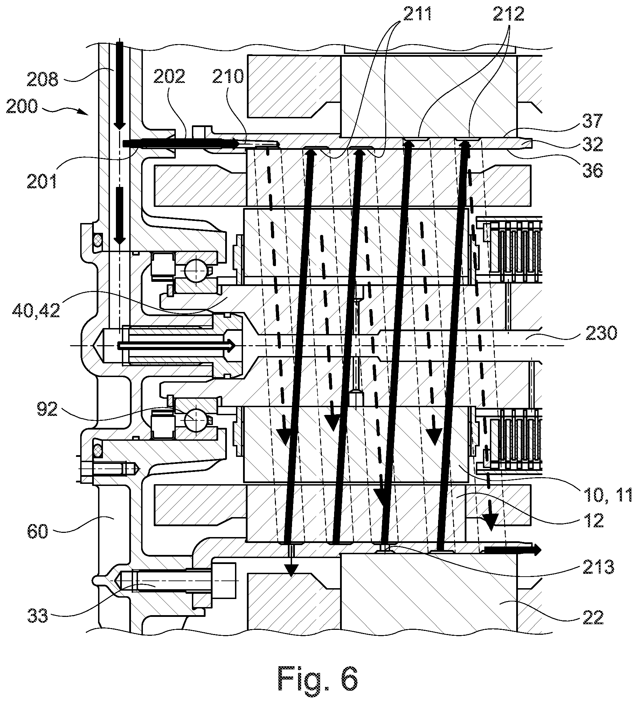

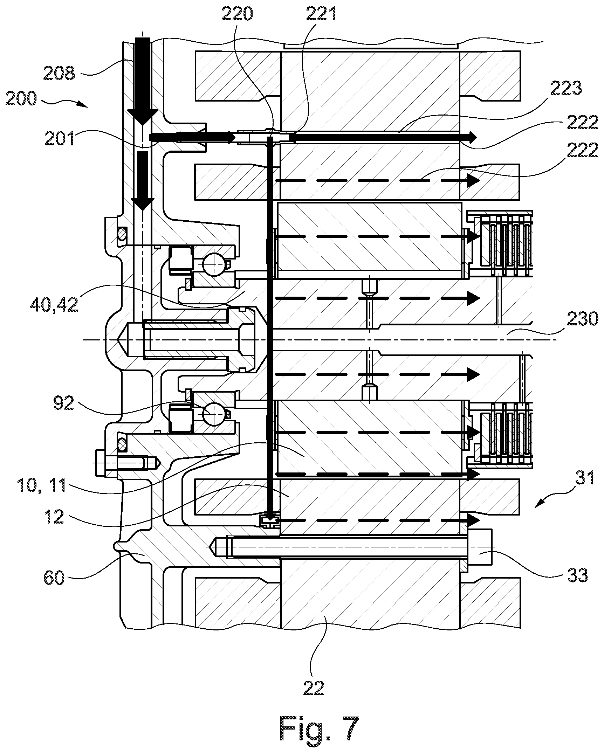

Die Figuren 5 und 6 zeigen die erfindungsgemäße Antriebsanordnung mit der erfindungsgemäßen Antriebseinheit und den anhand von Pfeilen verdeutlichten Kühlkreislauf. Die Figur 7 zeigt die erfindungsgemäße Antriebsanordnung mit der erfindungsgemäßen Antriebseinheit in der alternativen Ausführungsform, ebenfalls mit anhand von Pfeilen verdeutlichtem Kühlkreislauf.

Fig. 5 entspricht dabei im Wesentlichen Figur 2, wobei die Leistungselektronik 102 nur bereichsweise und das Differentialgetriebe gar nicht gezeigt ist.

Aus Figur 5 ist ersichtlich, dass mittels des Pumpenaktors 203 als Bestandteil des Kühlkreislaufs durch einen ersten Leitkanal 205 und einen zweiten Leitkanal 206 Kühlmittel zum Wärmetauscher 204 transportierbar ist.

Dazu fördert der Pumpenaktor 203 warmes Kühlmittel aus einem hier nicht dargestellten Reservoirs. Der erste Leitkanal 205 ist dabei als ein innerhalb des Gehäuseelements 62 angeordnetes Rohr ausgebildet, welches mit dem zweiten Leitkanal 206 im Gehäuseinnenraum strömungstechnisch verbunden ist. Der zweite Leitkanal 206 ist als integraler Bestandteil des zweiten Gehäuses 61 ausgebildet und erstreckt sich im Wesentlichen in diesem in axialer Richtung.

Ein vom Pumpenaktor 203 an den Wärmetauscher 204 geführtes warmes Kühlmittel wird von Wärmetauscher 204 gekühlt und danach in einen dritten Leitkanal 207 geführt. Der dritte Leitkanal 207 ist wie der zweite Leitkanal 207 als integraler Bestandteil des zweiten Gehäuses 61 ausgebildet und erstreckt sich im Wesentlichen in axialer Richtung.

Der dritte Leitkanal 207 ist strömungstechnisch mit einem vierten Leitkanal 208 verbunden, wobei dieser vierte Leitkanal 208 sich im Wesentlichen in radialer Richtung erstreckt und integraler Bestandteil des ersten Gehäuses 60 ist.

Der vierte Leitkanal 208 ermöglicht eine Führung von vom Wärmetauscher 204 gekühltem Kühlmittel an die Statoren 12, 22 der beiden elektrischen Rotationsmaschinen 10, 20, was in Figur 6 näher gezeigt ist, sowie eine Führung nach radial innen, wo der vierte Leitkanal 208 strömungstechnisch mit einem axial in der ersten Welle 40 verlaufenden Wellen-Strömungskanal 230 gekoppelt ist.

Der Wellen-Strömungskanal 230 dient der Zuführung von Kühlmittel zu den Rotoren 11, 21 der beiden Rotationsmaschinen 10, 20, zur Trennkupplung 50 sowie zur zentralen Lagereinheit 90.

Zum Zweck der Zuführung von Kühlmittel zum Rotor 11 der ersten elektrischen Rotationsmaschine 10 umfasst die erste Welle 40 sich radial erstreckende, erste Querbohrungen 231, welche sich strömungstechnisch an den Wellen-Strömungskanal 230 anschließen, und welche axial mittig in Bezug zum Rotor 11 der ersten elektrischen Rotationsmaschine 10 positioniert sind und damit in radialer Richtung vom Rotor 11 der ersten elektrischen Rotationsmaschine 10 überlagert sind.

Radial zwischen der ersten Welle 40 und dem Rotor 11 der ersten elektrischen Rotationsmaschine 10 sind zudem mehrere axiale Kühlkanäle 214 von der ersten Welle 40, dem Rotor 11 oder der ersten Welle 40 und dem Rotor 11 ausgebildet, welche sich von einer Stirnseite des Rotors 11 zur gegenüberliegenden Stirnseite erstrecken, und welche jeweils mit zumindest einer der ersten Querbohrungen 231 strömungstechnisch gekoppelt sind.

Entsprechend kann ein im Wellen-Strömungskanal 230 geführtes Kühlmittel über eine erste Querbohrung 231 in einen axialen Kühlkanal 214 und somit an den Rotor 11 der ersten elektrischen Rotationsmaschine 10 gelangen. Der axiale Kühlkanal 214 verteilt das Kühlmittel gleichmäßig in axialer Richtung entlang der radialen Innenseite des Rotors 11 der ersten elektrischen Rotationsmaschine 10 und realisiert damit für diesen eine optimale Kühlung. Das Kühlmittel tritt axial beidseitig neben dem Rotor 11 der ersten elektrischen Rotationsmaschine 10 aus dem axialen Kühlkanal 214 aus und wird dort entlang einer jeweiligen Stirnseite des Rotors 11 nach radial außen an Wicklungsköpfe des Stators 12 der ersten elektrischen Rotationsmaschine 10 geführt, um diese zu kühlen.

Zur Zuführung von Kühlmittel zum Rotor 21 der zweiten elektrischen Rotationsmaschine 20, zur Trennkupplung 50 sowie zur zentralen Lagereinheit 90 umfasst die erste Welle 40 außerdem sich radial erstreckende, weitere Querbohrungen 232, welche sich ebenfalls strömungstechnisch an den Wellen-Strömungskanal 230 anschließen.

Die weiteren Querbohrungen 232 sind dazu an unterschiedlichen axialen Positionen in der ersten Welle 40 angeordnet, wobei weitere Querbohrungen 232 zur Zuführung von Kühlmittel von der Trennkupplung 50 bzw. der zentralen Lagereinheit 90 radial überlagert sind, um diese zielgerichtet zu kühlen.

Die weiteren Querbohrungen 232 zum Zweck der Zuführung von Kühlmittel zum Rotor 21 der zweiten elektrischen Rotationsmaschine 20 führen radial zu einem Raum, den der Rotorträger 30, welcher den Rotor 21 der zweiten elektrischen Rotationsmaschine 20 trägt, bereichsweise begrenzt. Aus diesen weiteren Querbohrungen 232 austretendes Kühlmittel wird mittels Fliehkraft und/oder schwerkraftbedingt nach radial außen getragen, wo der Rotorträger 30 des Rotors 21 der zweiten elektrischen Rotationsmaschine 20 eine Führung des Kühlmittels an die dem ersten Gehäuse 60 abgewandte axiale Seite des Rotors 21 realisiert.

An der Anlagefläche des Rotors 21 der zweiten elektrischen Rotationsmaschine 20 am Rotorträger 30 sind dabei mehrere Nuten 23 in axialer Richtung vorgesehen, wobei diese entweder von dem Rotor 21 oder von dem Rotorträger 30 oder von dem Rotor 21 und dem Rotorträger 30 ausgebildet sind.

Die Nuten 23 ermöglichen damit eine axiale Verteilung des Kühlmittels in oder an dem Rotor 21 der zweiten elektrischen Rotationsmaschine 20.

Ein nach der Kühlung eines jeweiligen Aggregats wieder erwärmtes Kühlmittel sammelt sich im zweiten Gehäuse 61, von wo aus es zurück in das Reservoir geführt wird.

Fig. 6 zeigt einen Ausschnitt der erfindungsgemäßen Antriebseinheit 1 im Bereich der elektrischen Rotationsmaschinen 10, 20. Ergänzend zu Figur 5 ist in Figur 6 die detaillierte Darstellung des Kühlmittel-Flusses zur Kühlung der Statoren 12, 22 beider elektrischer Rotationsmaschinen 10, 20 zu sehen.

Dargestellt ist eine Kühlmittel-Zuführungseinrichtung 200 der Antriebseinheit 1, mit der Kühlmittel in axialer Richtung zwischen und/oder in die Statoren 12, 22 zuführbar ist.

Der Ausschnitt zeigt eine Antriebseinheit 1 entsprechend der Ausführungsform der Antriebseinheit 1 aus Figur 3. Das bedeutet, dass der gemeinsame Stator-Träger 32 fest mit dem ersten Gehäuse 60 verbunden ist, dass der Stator 12 der ersten elektrischen Rotationsmaschine 10 auf der radialen Innenseite 36 des gemeinsamen Stator-Trägers 32 angeordnet ist, und dass der Stator 22 der zweiten elektrischen Rotationsmaschine 20 auf der radialen Außenseite 37 des gemeinsamen Stator-Trägers 32 angeordnet ist.

Der vierte Leitkanal 208 ist dabei als Bestandteil der Kühlmittel-Zuführungseinrichtung 200 strömungstechnisch mit einer Verteilungseinrichtung 201 der Kühlmittel-Zuführungseinrichtung 200 gekoppelt, wobei die Verteilungseinrichtung 201 als wenigstens ein in axialer Richtung verlaufender Kanal im ersten Gehäuse 60 ausgestaltet ist. Die Verteilungseinrichtung 201 wiederum ist mittels wenigstens einer Verbindungshülse 202 mit zumindest einem in dem Stator-Träger 32 ausgeführten axialen Verbindungskanal 210 der Kühlmittel-Zuführungseinrichtung 200 strömungstechnisch gekoppelt. Die Verbindungshülse 202 ist zwecks der strömungstechnischen Verbindung der Verteilungseinrichtung 201 mit dem axialen Verbindungskanal 210 hohlzylinderförmig ausgeführt und weist einen kleineren Durchmesser auf als die Verteilungseinrichtung 201 und der axiale Verbindungskanal 210, so dass die Verbindungshülse 202 im Wesentlichen in axialer Richtung bereichsweise in die Verteilungseinrichtung 201 und den axialen Verbindungskanal 210 eingesteckt ist, um eine fluiddichte Verbindung zu gewährleisten.

Der axiale Verbindungskanal 210 ist wiederum strömungstechnisch mit einem radial inneren helixförmigen Kanal 211 zur Leitung von Kühlmittel verbunden, welcher an der radialen Innenseite 36 des Stator-Trägers 32 ausgebildet ist. Weiterhin ist auf der radialen Außenseite 37 des Stator-Trägers 32 ein radial äußerer helixförmiger Kanal 212 zur Leitung von Kühlmittel ausgebildet, wobei der radial innere helixförmige Kanal 211 mit dem radial äußeren helixförmigen Kanal 212 über einen radialen Verbindungskanal 213 durch den Stator-Träger 32 hindurch verbunden ist.

Die beiden helixförmigen Kanäle 211, 212 sind durch eine jeweilige Nut an der jeweiligen Seite des Stator-Trägers 32 ausgebildet, die durch die Anlage des jeweiligen Stators 12, 22 an der jeweiligen Seite des Stator-Trägers 32 an der Außenseite geschlossen ist und somit einen Kanal ausbildet.

Der radial innere helixförmige Kanal 211 weist dabei eine derartige axiale Erstreckung bzw. axiale Position am Stator-Träger 32 auf, dass er sich weitestgehend axial entlang dem Stator 12 der ersten elektrischen Rotationsmaschine 10 erstreckt, der vom Stator-Träger 32 an dessen radialer Innenseite 36 getragenen ist. Der radial äußere helixförmige Kanal 212 weist entsprechend eine derartige axiale Erstreckung bzw. axiale Position am Stator-Träger 32 auf, dass er sich weitestgehend axial entlang dem Stator 22 der zweiten elektrischen Rotationsmaschine 20 erstreckt, der vom Stator-Träger 32 an dessen radialer Außenseite 37 getragenen ist.

Es ist somit in dieser Ausführungsform eine effiziente Kühlung des Stators 12 der ersten elektrischen Rotationsmaschine 10 mittels im radial inneren helixförmigen Kanal 211 geführtem Kühlmittel realisierbar, und eine effiziente Kühlung des Stators 22 der zweiten elektrischen Rotationsmaschine 20 mittels im radial äußeren helixförmigen Kanal 212 geführtem Kühlmittel realisierbar.

In Fig. 7 ist ein Ausschnitt der erfindungsgemäßen Antriebseinheit 1 im Bereich der elektrischen Rotationsmaschinen 10, 20 in der alternativen Ausführungsform dargestellt. Figur 7 zeigt einen Kühlmittel-Fluss in einer Antriebseinheit gemäß Figur 4.

Dargestellt ist eine Kühlmittel-Zuführungseinrichtung 200 der Antriebseinheit 1, wobei diese einen Ringkanal 220 umfasst, der mehrere Kühlmittel-Teilströme 222 erzeugende Axial-Auslässe 221 aufweist, wobei mit einem jeweiligen Axial-Auslass 221 ein Strömungskanal 223 in der Stator-Einheit 31 strömungstechnisch gekoppelt ist.

Ein jeweiliger derartiger Strömungskanal 223 ist dabei als eine axiale Bohrung ausgeführt, wobei die Strömungskanäle 223 radial zwischen dem Stator 12 der ersten elektrischen Rotationsmaschine 10 und dem Stator 22 der zweiten elektrischen Rotationsmaschine 20 angeordnet sind. Somit kann Kühlmittel in der Stator-Einheit 31 derart geführt werden, dass eine optimale Kühlung beider Statoren 12, 22 im Wesentlichen gleichermaßen realisiert ist.

Die Axial-Auslässe 221 sind dabei in im Wesentlichen regelmäßigen Winkelabständen am Umfang verteilt vom Ringkanal 220 ausgebildet, so dass eine möglichst gleichmäßige Verteilung an Kühlmittel-Teilströmen 222 und damit eine optimale Kühlung am gesamten Umfang des Stators 12 der ersten elektrischen Rotationsmaschine 10 und am gesamten Umfang des Stators 22 der zweiten elektrischen Rotationsmaschine 20 realisierbar ist.

Mit der erfindungsgemäßen Antriebseinheit sowie der Antriebsanordnung lässt sich in kostengünstiger Ausgestaltung sowie bauraumsparender Weise eine optimale Kühlung und damit ein effizienter Betrieb gewährleisten.

### Bezugszeichenliste

- 1: Antriebseinheit
- 2: Eingangsseite der Antriebseinheit
- 3: Ausgangsseite der Antriebseinheit
- 4: Anschlusselement der Antriebseinheit
- 5: innenverzahntes Zahnrad des Anschlusselements

- 10: erste elektrische Rotationsmaschine
- 11: Rotor der ersten elektrischen Rotationsmaschine
- 12: Stator der ersten elektrischen Rotationsmaschine

- 20: zweite elektrische Rotationsmaschine
- 21: Rotor der zweiten elektrischen Rotationsmaschine
- 22: Stator der zweiten elektrischen Rotationsmaschine
- 23: Nut

- 30: Rotorträger der zweiten elektrischen Rotationsmaschine
- 31: Stator-Einheit
- 32: gemeinsamer Stator-Träger
- 33: Trägerschraube
- 34: Rotorlagesensor
- 35: Sicherungsschraube
- 36: radiale Innenseite des Stator-Trägers
- 37: radiale Außenseite des Stator-Trägers

- 40: erste Welle
- 41: zweite Welle
- 42: erster axialer Endbereich der ersten Welle
- 43: zweiter axialer Endbereich der ersten Welle
- 44: erster axialer Endbereich der zweiten Welle
- 45: zweiter axialer Endbereich der zweiten Welle
- 46: Außenverzahnung der ersten Welle
- 47: Außenverzahnung der zweiten Welle

- 50: Trennkupplung
- 51: Eingangsseite der Trennkupplung
- 52: Ausgangsseite der Trennkupplung
- 53: Betätigungssystem

- 60: erstes Gehäuse
- 61: zweites Gehäuse
- 62: Gehäuseelement

- 70: erste Übersetzungsstufe
- 71: zweite Übersetzungsstufe
- 72: dritte Übersetzungsstufe

- 80: Differentialgetriebe
- 81: Zwischenwelle
- 82: erstes Zahnrad
- 83: zweites Zahnrad
- 84: Außenverzahnung der Zwischenwelle

- 90: zentrale Lagereinheit
- 91: Nadellager
- 92: Stützlager
- 93: zweireihige Lagereinheit

- 100: Antriebsanordnung
- 101: Schwingungsdämpfer
- 102: Leistungselektronik
- 103: Verbrennungskraftmaschine
- 104: Abtriebselement der Verbrennungskraftmaschine
- 105: Radantriebswelle

- 200: Kühlmittel-Zuführungseinrichtung
- 201: Verteilungseinrichtung
- 202: Verbindungshülse
- 203: Pumpenaktor
- 204: Wärmetauscher
- 205: erster Leitkanal
- 206: zweiter Leitkanal
- 207: dritter Leitkanal
- 208: vierter Leitkanal

- 210: axialer Verbindungskanal
- 211: radial innerer helixförmiger Kanal
- 212: radial äußerer helixförmiger Kanal
- 213: radialer Verbindungskanal
- 214: axialer Kühlkanal

- 220: Ringkanal
- 221: Axial-Auslass
- 222: Kühlmittel-Teilstrom
- 223: Strömungskanal

- 230: Wellen-Strömungskanal
- 231: erste Querbohrung
- 232: weitere Querbohrung

## Patentansprüche

1. Antriebseinheit (1) für einen Antriebsstrang eines elektrisch antreibbaren Kraftfahrzeugs, insbesondere eines Hybridkraftfahrzeuges, mit einer ersten elektrischen Rotationsmaschine (10) sowie einer zweiten elektrischen Rotationsmaschine (20) und einer ersten Welle (40) sowie einer zweiten Welle (41), wobei ein Rotor (11) der ersten elektrischen Rotationsmaschine (10) drehfest mit der ersten Welle (40) verbunden ist und ein Rotor (21) der zweiten elektrischen Rotationsmaschine (20) drehfest mit der zweiten Welle (41) verbunden ist, wobei die erste elektrische Rotationsmaschine (10) zumindest bereichsweise radial sowie axial innerhalb eines von der zweiten elektrischen Rotationsmaschine (20) radial begrenzten Raums angeordnet ist, und die erste elektrische Rotationsmaschine (10) als Innenläufermotor ausgebildet ist und die zweite elektrische Rotationsmaschine (20) als Außenläufermotor ausgebildet ist, wobei der Stator (12) der ersten elektrischen Rotationsmaschine (10) sowie der Stator (22) der zweiten elektrischen Rotationsmaschine (20) mechanisch aneinander fixiert sind, wobei die Antriebseinheit (1) eine axial neben den Statoren (12, 22) angeordnete Kühlmittel-Zuführungseinrichtung (200) umfasst, mit der Kühlmittel zwischen die Statoren (12, 22) axial zuführbar ist, wobei die Statoren (12, 22) der beiden elektrischen Rotationsmaschinen (10, 20) auf einem gemeinsamen Stator-Träger (32) angeordnet sind, wobei mittels der Kühlmittel-Zuführungseinrichtung (200) Kühlmittel dem Stator-Träger (32) zuführbar ist und dieser zur Verteilung des Kühlmittels in axialer Richtung ausgestaltet ist, **dadurch gekennzeichnet, dass** der Stator-Träger (32) an seiner radialen Innenseite (36) und an seiner radialen Außenseite (37) einen helixförmigen Kanal (211, 212) ausbildet zur Leitung von Kühlmittel, wobei zumindest ein radialer Verbindungskanal (213) zwischen dem helixförmigen Kanal (211) an der radialen Innenseite (36) und dem helixförmigen Kanal (212) an der radialen Außenseite (37) vorhanden ist.

2. Antriebseinheit (1) nach Anspruch 1, **dadurch gekennzeichnet, dass** die Kühlmittel-Zuführungseinrichtung (200) eine axial neben den elektrischen Rotationsmaschinen (10, 20) angeordnete Verteilungseinrichtung (201) umfasst zur Zuführung von Kühlmittel zum Stator-Träger (32), wobei die Verteilungseinrichtung (201) mittels wenigstens einer Verbindungshülse (202) mit einem zumindest einem axial in dem Stator-Träger (32) ausgeführten Verbindungskanal (210) strömungstechnisch gekoppelt ist.

3. Antriebseinheit (1) nach einem der Ansprüche 1 und 2, **dadurch gekennzeichnet, dass** die erste Welle (40) einen axial verlaufenden Wellen-Strömungskanal (230) aufweist, an den sich mit radialer Erstreckung wenigstens eine erste Querbohrung (231) anschließt, durch die Kühlmittel aus dem Wellen-Strömungskanal (230) dem Rotor (11) der ersten elektrischen Rotationsmaschine (10) zuführbar ist.

4. Antriebseinheit (1) nach Anspruch 3, **dadurch gekennzeichnet, dass** der Rotor (21) der zweiten elektrischen Rotationsmaschine (20) mittels eines Rotorträgers (30) drehbar gelagert ist, wobei dieser Rotorträger (30) Nuten (23) und/oder Bohrungen aufweist zur axialen Verteilung des Kühlmittels in oder an dem Rotor (21) der zweiten elektrischen Rotationsmaschine (20).

5. Antriebseinheit (1) nach einem der Ansprüche 3 und 4 **dadurch gekennzeichnet, dass** in der ersten Welle (40) wenigstens eine weitere Querbohrung (232) ausgebildet ist zwecks Ausströmung von Kühlmittel axial neben den elektrischen Rotationsmaschinen (10, 20).

6. Antriebsanordnung (100) mit einer Antriebseinheit (1) gemäß einem der Ansprüche 1 bis 5 sowie mit einer Verbrennungskraftmaschine (103), die mittels eines Abtriebselements (104) der Verbrennungskraftmaschine (103) drehfest mit dem Rotor (11) der ersten elektrischen Rotationsmaschine (10) gekoppelt oder koppelbar ist.

## Claims

1. A drive unit (1) for a drive train of an electrically powered motor vehicle, in particular a hybrid motor vehicle, having a first electric rotary machine (10) and a second electric rotary machine (20) and a first shaft (40) and a second shaft (41), wherein a rotor (11) of the first electric rotary machine (10) is rotationally fixed to the first shaft (40) and a rotor (21) of the second electric rotary machine (20) is rotationally fixed to the second shaft (41), wherein the first electric rotary machine (10) is arranged at least partially radially and axially within a space radially delimited by the second electric rotary machine (20), and the first electric rotary machine (10) is designed as an internal rotor motor and the second electric rotary machine (20) is designed as an external rotor motor, wherein the stator (12) of the first electric rotary machine (10) and the stator (22) of the second electric rotary machine (20) are mechanically fixed to one another, wherein the drive unit (1) comprises a coolant supply device (200) arranged axially next to the stators (12, 22), with which coolant can be supplied axially between the stators (12, 22), wherein the stators (12, 22) of the two electric rotary machines (10, 20) are arranged on a common stator support (32), wherein coolant can be supplied to the stator support (32) by means of the coolant supply device (200) and the stator support (32) is designed to distribute the coolant in the axial direction, **characterised in that** the stator support (32) forms a helical channel (211, 212) on its radial inner side (36) and on its radial outer side (37) for conveying coolant, wherein at least one radial connecting channel (213) is provided between the helical channel (211) on the radial inner side (36) and the helical channel (212) on the radial outer side (37).

2. The drive unit (1) according to claim 1, **characterised in that** the coolant supply device (200) comprises a distribution device (201) arranged axially next to the electric rotary machines (10, 20) for supplying coolant to the stator support (32), wherein the distribution device (201) is fluidically coupled by means of at least one connecting sleeve (202) to at least one connecting channel (210) extending axially in the stator support (32).

3. The drive unit (1) according to either one of claims 1 and 2, **characterised in that** the first shaft (40) has an axially extending shaft flow channel (230), to which at least one first transverse bore (231) is radially connected, through which coolant from the shaft flow channel (230) can be supplied to the rotor (11) of the first electric rotary machine (10).

4. The drive unit (1) according to claim 3, **characterised in that** the rotor (21) of the second electric rotary machine (20) is rotatably mounted by means of a rotor carrier (30), wherein this rotor carrier (30) has grooves (23) and/or bores for axial distribution of the coolant in or on the rotor (21) of the second electric rotary machine (20).

5. The drive unit (1) according to either one of claims 3 and 4, **characterised in that** at least one further transverse bore (232) is formed in the first shaft (40) for the purpose of allowing coolant to flow axially alongside the electric rotary machines (10, 20).

6. A drive assembly (100) having a drive unit (1) according to any one of claims 1 to 5 and having an internal combustion engine (103), which is or can be coupled in a rotationally fixed manner to the rotor (11) of the first electric rotary machine (10) via an output element (104) of the internal combustion engine (103).

## Revendications

1. Unité d'entraînement (1) pour un groupe motopropulseur d'un véhicule automobile à entraînement électrique, en particulier d'un véhicule hybride, comportant une première machine rotative électrique (10), une seconde machine rotative électrique (20), un premier arbre (40) et un second arbre (41), un rotor (11) de la première machine rotative électrique (10) étant relié solidaire en rotation au premier arbre (40), et un rotor (21) de la seconde machine rotative électrique (20) étant relié solidaire en rotation au second arbre (41), la première machine rotative électrique (10) étant agencée, au moins partiellement, radialement et axialement à l'intérieur d'un espace délimité radialement par la seconde machine rotative électrique (20), la première machine rotative électrique (10) étant formée comme un moteur à rotor interne et la seconde machine rotative électrique (20) étant formée comme un moteur à rotor externe, le stator (12) de la première machine rotative électrique (10) et le stator (22) de la seconde machine rotative électrique (20) étant fixés mécaniquement l'un à l'autre, l'unité d'entraînement (1) comprenant un dispositif d'alimentation en fluide de refroidissement (200) agencé axialement à côté des stators (12, 22), ce qui permet l'alimentation axiale en fluide de refroidissement entre les stators (12, 22), les stators (12, 22) des deux machines rotatives électriques (10, 20) étant agencés sur un support de stator (32) commun, le dispositif d'alimentation en fluide de refroidissement (200) permettant d'alimenter le fluide de refroidissement vers le support de stator (32), lequel est formé pour répartir le fluide de refroidissement dans le sens axial, **caractérisée en ce que** le support de stator (32) forme, sur son côté radial intérieur (36) et sur son côté radial extérieur (37), un canal hélicoïdal (211, 212) destiné à acheminer le fluide de refroidissement, au moins un canal de liaison radial (213) étant présent entre le canal hélicoïdal (211) sur le côté radial intérieur (36) et le canal hélicoïdal (212) sur le côté radial extérieur (37).

2. Unité d'entraînement (1) selon la revendication 1, **caractérisée en ce que** le dispositif d'alimentation en fluide de refroidissement (200) comprend un dispositif de répartition (201) agencé axialement à côté des machines rotatives électriques (10, 20) pour alimenter en fluide de refroidissement le support de stator (32), le dispositif de répartition (201) étant accouplé fluidiquement au moyen d'au moins un manchon de liaison (202) à au moins un canal de liaison (210) réalisé axialement dans le support de stator (32).

3. Unité d'entraînement (1) selon l'une des revendications 1 et 2, **caractérisée en ce que** le premier arbre (40) présente un canal d'écoulement d'arbre s'étendant axialement (230) auquel se raccorde, avec une extension radiale, au moins un premier alésage transversal (231) à travers lequel du fluide de refroidissement provenant du canal d'écoulement d'arbre (230) peut être alimenté vers le rotor (11) de la première machine rotative électrique (10).

4. Unité d'entraînement (1) selon la revendication 3, **caractérisée en ce que** le rotor (21) de la seconde machine rotative électrique (20) est monté de manière rotative au moyen d'un support de rotor (30), ce support de rotor (30) présentant des rainures (23) et/ou des alésages pour la répartition axiale du fluide de refroidissement dans ou sur le rotor (21) de la seconde machine rotative électrique (20).

5. Unité d'entraînement (1) selon l'une des revendications 3 e 4, **caractérisée en ce qu'**au moins un autre alésage transversal (232) est formé dans le premier arbre (40) pour permettre l'écoulement du fluide de refroidissement axialement à côté des machines rotatives électriques (10, 20).

6. Ensemble d'entraînement (100) comportant une unité d'entraînement (1) selon l'une des revendications 1 à 5 ainsi qu'un moteur à combustion interne (103) qui est accouplé ou qui peut être accouplé solidaire en rotation avec le rotor (11) de la première machine rotative électrique (10) au moyen d'un élément d'entraînement (104) du moteur à combustion interne (103).
